# EUROPEAN PATENT APPLICATION

(11) **EP 2 977 162 A1**
(43) Date of publication of application: **27.01.2016**
(21) Application number: 14768695.0
(22) Date of filing: 18.03.2014
(51) Int. Cl.: B28B 11/02, B01D 39/20

(54) **SEALING METHOD FOR HONEYCOMB STRUCTURAL BODY, AND SEALING DEVICE FOR HONEYCOMB STRUCTURAL BODY**

(30) Priority: 21.03.2013 JP 2013058203
(71) Applicant: NGK Insulators, Ltd., Nagoya-shi, Aichi 467-8530 (JP)
(72) Inventor: ITO Eiji, Nagoya-shi Aichi 467-8530 (JP); OHTA Masamitsu, Nagoya-shi Aichi 467-8530 (JP)
(74) Representative: Naylor, Matthew John
(86) International application number: PCT/JP2014/057235
(87) International publication number: WO 2014/148460

(57) **Abstract**

The present invention provides a technique which simplifies the step of sealing a honeycomb structure among all the steps of producing DPF to improve the productivity. The present invention involves:
a masking step of masking the surface of an end part of the honeycomb structure while continuously unwinding a roll-shaped masking film without cutting the film;
a slurry filling hole formation step of forming a slurry filling hole on a place on the masking film which covers the opening end part of a cell to be sealed;
a sealing step of filling a slurry through the slurry filling hole; and
a masking film peeling step of peeling the masking film that is pasted onto the surface of the end part of the honeycomb structure while winding the film into a roll again without cutting the film.

## Description

### TECHNICAL FIELD

The present invention relates to a method and a device for sealing a honeycomb structure.

### BACKGROUND ART

DPF (diesel particulate filter), which is used to remove particulate matter in an exhaust gas from a diesel engine, has a structure such that cells are alternately sealed on both end surfaces of a honeycomb structure. As a method for sealing the cells, Patent Document 1 discloses the technique of pasting a masking film having substantially the same shape as that of an end surface of a honeycomb structure onto the end surface of the honeycomb structure, forming a slurry filling hole in a place on this film which covers an opening end part of a cell to be sealed, thereafter immersing an end part of the honeycomb structure in a vessel having a slurry stored therein to fill the opening end part of the predetermined cell with a slurry, and drying the slurry.

While DPF is produced through a burning step after drying of the slurry with which the opening end part of the cell is filled, the prior art requires a step of removing the slurry attached to the film surface and side end parts of the honeycomb structure and a step of peeling the film, after drying of the slurry, for each product and thus disadvantageously makes the production line and production process complex.

The film cannot completely be peeled even through the above steps in some cases, and, in those cases, manual film peeling is required, leading to the problem of bad productivity. Also, when the film is larger in size than the end surface of the honeycomb structure, the operation of folding an extra portion onto a side surface of the honeycomb structure disadvantageously takes much time. Additionally, the above prior art involving film peeling after drying of the slurry has the disadvantage of bad drying efficiency since drying is performed in a state where the film remains pasted on the structure.

### CITATIONS LIST

### Patent Document

Patent Document 1: JP 3715174 B

### SUMMARY OF THE INVENTION

### TECHNICAL PROBLEMS

An object of the present invention is to provide a technique which solves the above-described problems and which simplifies the step of sealing a honeycomb structure among all the steps of producing DPF, thereby improving the productivity.

### SOLUTIONS TO PROBLEMS

The method for sealing a honeycomb structure according to the present invention, which has been made in order to solve the above problems, is a method for sealing a honeycomb structure, the honeycomb structure being composed of a plurality of cells, by filling an opening end part of a cell with a slurry while carrying the honeycomb structure in a state where the cell longitudinal direction is held horizontally,
the method comprising:
a masking step of masking the surface of an end part of the honeycomb structure while continuously unwinding the roll-shaped masking film in synchronization with the honeycomb structure without cutting the film;
a slurry filling hole formation step of forming a slurry filling hole in a place on the masking film which covers the opening end part of the cell to be sealed;
a sealing step of filling a slurry through the slurry filling hole; and
a masking film peeling step of peeling the masking film that is pasted onto the surface of the end part of the honeycomb structure while winding the film into a roll again without cutting the film.

The invention according to claim 2 relates to the method for sealing a honeycomb structure according to claim 1,
wherein, prior to the masking step, the method comprises a frame member setting step of fitting the end part of the honeycomb structure into a frame member having a central opening part having substantially the same shape as the cross sectional shape of the honeycomb structure to align the surface of the end part of the honeycomb structure and the outer surface of the frame member, and
wherein the masking step involves pasting the masking film onto the surface of the end part of the honeycomb structure from the outer surface side of the frame member aligned in the frame member setting step while unwinding the roll-shaped masking film having one side surface which is an adhesive surface.

The invention according to claim 3 relates to the method for sealing a honeycomb structure according to claim 1 or 2,
wherein the slurry filling hole formation step involves imaging an end surface of the honeycomb structure, processing the image of the end surface imaged to recognize the positions of all the cells, and thereafter irradiating, with laser light, the position on the masking film which covers the opening end part of the cell to be sealed, thereby forming a slurry filling hole.

The invention according to claim 4 relates to the method for sealing a honeycomb structure according to any one of claims 1 to 3,
wherein, prior to the masking film peeling step, the method comprises a slurry removal step of removing an excessive slurry that is attached to the surface of the masking film.

The invention according to claim 5 relates to the method for sealing a honeycomb structure according to claim 4,
wherein, after the slurry removal step and prior to the masking film peeling step, the method comprises a surface drying step of drying the surface layer part of the slurry with which the end of the opening part of the cell has been filled.

The invention according to claim 6 relates to the method for sealing a honeycomb structure according to any one of claims 1 to 5, wherein the end surfaces of the honeycomb structure are sealed one by one or simultaneously.

The invention according to claim 7 relates to a device for sealing a honeycomb structure, the honeycomb structure being composed of a plurality of cells, which device seals an opening end part of the cell while carrying the honeycomb structure in a state where the cell longitudinal direction is held horizontally,
the device comprising:
a frame member having a central opening part having substantially the same shape as the cross sectional shape of the honeycomb structure;
a masking film pasting means which pastes a masking film onto the surface of the end part of the honeycomb structure fitted into the frame member while continuously unwinding the roll-shaped masking film without cutting the film;
a slurry filling hole formation means which forms a slurry filling hole in a place on the masking film which covers the opening end part of the cell to be sealed;
a sealing means which fills the slurry through the slurry filling hole; and
a masking film peeling means which peels the masking film that is pasted onto the surface of the end part of the honeycomb structure while continuously winding the film without cutting the film.

The invention according to claim 8 relates to the device for sealing a honeycomb structure according to claim 7,
wherein the device comprises a slurry removal means of removing an excessive slurry that is attached to the surface of the masking film prior to the peeling of the masking film.

The invention according to claim 9 relates to the device for sealing a honeycomb structure according to claim 8,
wherein the device comprises a surface drying means of drying the slurry surface after the slurry removal.

### ADVANTAGEOUS EFFECTS OF INVENTION

According to the present invention involving masking the surface of an end part of the honeycomb structure while continuously unwinding the roll-shaped masking film in synchronization with the honeycomb structure without cutting the film; subsequently forming a slurry filling hole and sealing; and then peeling the masking film that is pasted onto the surface of the end part of the honeycomb structure while winding the film into a roll again without cutting the film, it is possible to easily and continuously peel the film along with winding. It becomes unnecessary to peel the film and remove the slurry attached to the side end parts for each product, and thus it is possible to make the production line and production process simple. Also, since the film is surely peeled along with winding, it becomes unnecessary to manually peel the film, thereby making it possible to improve the productivity.

Also, in the prior art, the end surface of a honeycomb structure was masked using a masking film having substantially the same shape as that of the end surface. When the masking film was larger in size than the end surface of the honeycomb structure, an extra portion was folded onto a side surface of the honeycomb structure, so that the masking film pasting operation and masking film peeling operation took much labor and time. On the other hand, in the present invention, a roll-shaped masking film is continuously unwound without being cut, and used in masking application and, after use, the film is wound as it is, thereby making it possible to omit the folding operation along with the film pasting operation and to easily carry out the film peeling operation along with the film winding operation, and to improve the operability of the film pasting operation and film peeling operation.

Additionally, film peeling is carried out prior to the slurry drying step in the present invention, and thus the drying efficiency can also be improved as compared with the case where drying was carried out in a state where the film remained pasted.

### BRIEF DESCRIPTION OF DRAWINGS

FIG 1 is an overall schematic view of Embodiment 1.
FIG. 2 is an overall schematic view of Embodiment 2.
FIG 3 is an overall schematic view of Embodiment 3.

### DESCRIPTION OF EMBODIMENTS

Hereinafter, preferred embodiments of the present invention will be described.

### (Embodiment 1)

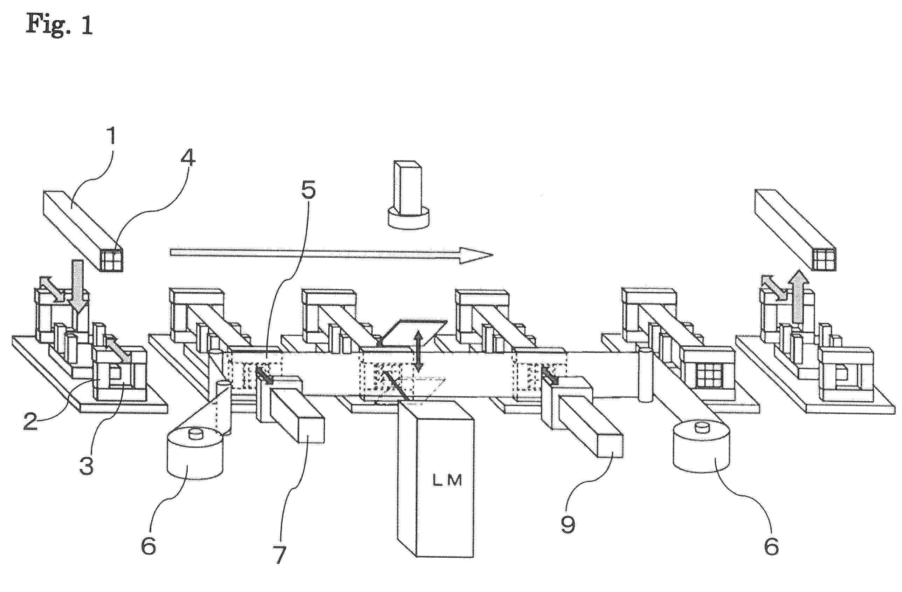

As shown in FIG. 1, Embodiment 1 has:
a frame member setting step of setting a honeycomb structure 1 in a frame member 2;
a masking film pasting step of pasting a masking film 6 on the end part surface 4 of the honeycomb structure 1 and the outer surface 5 of the frame member 2;
a slurry filling hole formation step of irradiating with laser light a position on the masking film 6 which covers the opening end part of the cell to be sealed, thereby forming a slurry filling hole;
a sealing step of filling the end part of the honeycomb structure 1 with a slurry; and
a masking film peeling step of peeling the masking film 6 from the honeycomb structure 1 and frame member 2 which have undergone the sealing step. Hereinafter, the respective steps will be described in detail.

### (Frame member setting step)

As shown in FIG 1, the honeycomb structure 1 composed of a plurality of cells is fitted, at its end part, into the frame member 2 while the cell longitudinal direction is horizontal. The frame member 2 has a central opening part 3 having substantially the same shape as the cross sectional shape of the honeycomb structure 1. The honeycomb structure 1 fitted into the frame member 2 is aligned so that the end part surface 4 thereof and the outer surface 5 of the frame member 2 lie in substantially the same plane.

The honeycomb structure 1 of this embodiment is a honeycomb structure made of SiC which is used in SiC-DPF (diesel particulate filter made of SiC), and is prepared by molding a body obtained by kneading molding raw materials into a honeycomb shape and drying it in accordance with a conventional common technique.

### (Masking film pasting step)

The frame member 2 and honeycomb structure 1 set in the frame member setting step are intermittently carried to the masking film pasting step while the cell longitudinal direction is held horizontally.

In the masking film pasting step, as shown in FIG. 1, the roll-shaped masking film 6 having one side surface which is an adhesive surface is continuously unwound without being cut, and arranged on the outer surface side 5 of the frame member 2, and then pushed by means of a pushing means 7 to be pasted onto both the end part surface 4 of the honeycomb structure 1 and the outer surface 5 of the frame member 2.

The masking film 6 having one side surface which is an adhesive surface is used in this manner, thereby making it possible to cover both the end part surface 4 of the honeycomb structure 1 and the outer surface 5 of the frame member 2 with the masking film 6 at the same time without using any complicated additional device, and thereafter also avoiding a positional deviation between them.

Also, in the case where a masking film having substantially the same shape as that of the end surface of the honeycomb structure is pasted onto the end surface of the honeycomb structure as in the prior art, when the film is larger in size than the end surface of the honeycomb structure, the operation of folding an extra portion onto a side surface of the honeycomb structure disadvantageously takes much time. However, the masking film 6 is pasted onto the end part surface 4 of the honeycomb structure 1 from the outer surface 5 side of the frame member 2 aligned in the above-described step while the roll-shaped film 6 is continuously unwound without being cut in the present invention. Therefore, the masking film cutting operation and folding operation are completely unnecessary, thereby making it possible to drastically improving the operation efficiency of the masking film pasting operation.

The material for the masking film 6 is not particularly limited, but is preferably polypropylene (PP), polyethylene terephthalate (PET), polyimide or a fluorine resin in consideration of heat processability in the formation of a slurry filling hole which will be described below.

### (Slurry filling hole formation step)

The honeycomb structure 1 and frame member 2 on which the masking film 6 is pasted are intermittently carried to the slurry filling hole formation step while the cell longitudinal direction is held horizontally.

In the slurry filling hole formation step of this embodiment, as with the conventional technique, the positions of all the cells are recognized by imaging an end surface of the honeycomb structure and processing the image of the end surface imaged, and a position on the masking film 6 which covers the opening end part of the cell to be sealed is then irradiated with laser light, thereby forming a slurry filling hole.

### (Sealing step)

The honeycomb structure 1 and frame member 2 on which the masking film 6 formed with the slurry filling hole is pasted are intermittently carried to the sealing step while the cell longitudinal direction is held horizontally.

In the sealing step, a technique of immersing an end part of the honeycomb structure in a vessel in which a slurry 11 is stored is generally employed.

### (Masking film peeling step)

The honeycomb structure 1 and frame member 2 which have undergone the sealing step are intermittently carried to the masking film peeling step in a state where the masking film 6 remains pasted thereon while the cell longitudinal direction is held horizontally.

The masking film 6 is used while it is fed by the so-called "roll-to-roll system" in the present invention, and the masking film 6 unwound from a roll shape in the above-described masking film pasting step is wound into a roll shape again in this step.

The masking film 6 is used while it is fed by the so-called "roll-to-roll system" in this manner, thereby making it possible to continuously peel the masking film 6 pasted onto the end part surface 4 of the honeycomb structure 1 and the outer surface 5 of the frame member 2 along with the action of winding the masking film 6. Therefore, it becomes unnecessary to peel the film and remove the slurry attached to the side end part for each product, and thus it is possible to make the production line and production process simple. Also, since the film is surely peeled along with winding, it becomes unnecessary to manually peel the film remaining due to incomplete peeling again, thereby making it possible to improve the productivity.

Further, film peeling is carried out prior to the slurry drying step in the present invention, and thus the drying efficiency can also be improved as compared with the case where drying was carried out in a state where the film remained pasted in the prior art.

### (Embodiment 2)

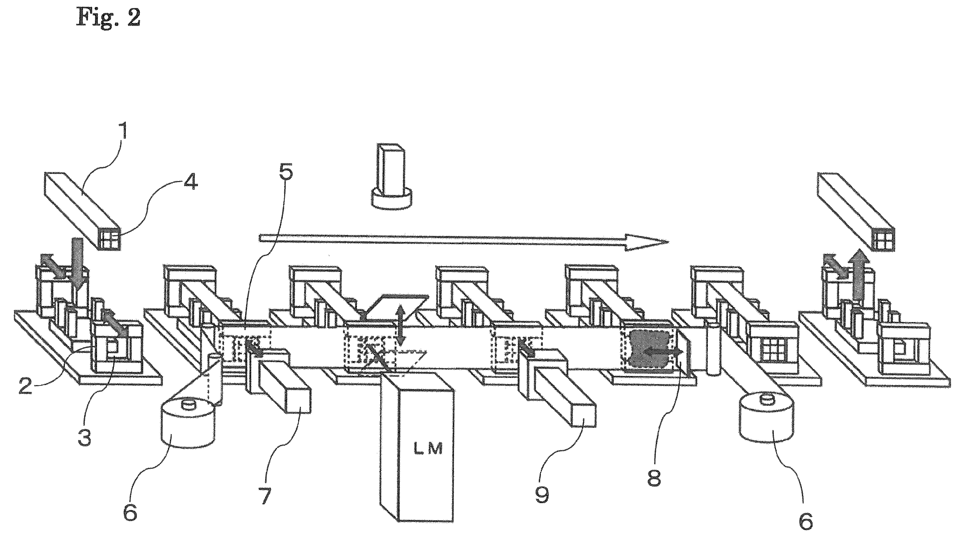

As shown in FIG. 2, a slurry removal step of removing an excessive slurry that is attached to the surface of the masking film can also be provided prior to the masking film peeling step.

### (Slurry removal step)

In this embodiment, as shown in FIG. 2, the honeycomb structure 1 and frame member 2 which have undergone the sealing step are intermittently carried to the slurry removal step in a state where the masking film 6 remains pasted thereon.

In the slurry removal step of this embodiment, an excessive slurry that is attached to the surface of the masking film 6 is scraped using a scraping plate 8, but the scraping method is not particularly limited thereto. For example, the mechanism of brushing or wiping off with a roll such an excessive slurry can also be employed.

An excessive slurry is removed prior to peeling of the masking film in this manner, thereby making it possible to prevent a part of the slurry with which the end of the opening part of the cell is filled from being taken away by the masking film when the masking film is peeled, and also to prevent unstable winding when winding the masking film into a roll.

### (Embodiment 3)

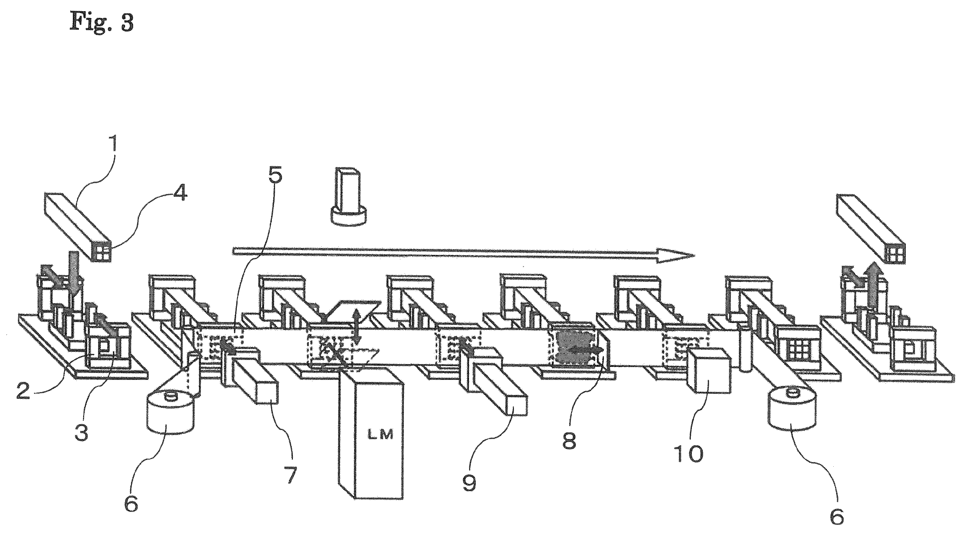

As shown in FIG. 3, a surface drying step of drying the surface layer part of the slurry with which the end of the opening part of the cell has been filled can also be provided after the above-described slurry removal step and before the above-described masking film peeling step.

### (Surface drying step)

In this embodiment, as shown in FIG. 3, the honeycomb structure 1 and frame member 2 which have undergone the slurry removal step are intermittently carried to the surface drying step in a state where the masking film 6 remains pasted thereon.

The surface drying step has only to involve drying the surface layer part of the slurry with which the end of the opening part of the cell has been filled by a surface drying device 10, and it is not especially necessary to dry the entire slurry with which the end of the opening part of the cell has been filled. The drying means is not particularly limited, and, for example, can be hot air, a heater and the like.

The surface layer part of the slurry with which the end of the opening part of the cell has been filled is dried, thereby making it possible to alleviate the degree of slurry shrinkage on the end surface of the cell opening part after drying the entire slurry, which is likely to occur when peeling the masking film before the step of drying the entire slurry.

### REFERENCE SIGNS LIST

1. Honeycomb structure
2. Frame member
3. Central opening part
4. End part surface
5. Outer surface
6. Masking film
7. Pushing means
8. Scraping plate
9. Slurry filling means
10. Surface drying device

## Claims

1. A method for sealing a honeycomb structure, the honeycomb structure being composed of a plurality of cells, by filling an opening end part of a cell with a slurry while carrying the honeycomb structure in a state where the cell longitudinal direction is held horizontally,
the method comprising:
a masking step of masking the surface of an end part of the honeycomb structure while continuously unwinding a roll-shaped masking film in synchronization with the honeycomb structure without cutting the film;
a slurry filling hole formation step of forming a slurry filling hole in a place on the masking film which covers the opening end part of the cell to be sealed;
a sealing step of filling a slurry through the slurry filling hole; and
a masking film peeling step of peeling the masking film that is pasted onto the surface of the end part of the honeycomb structure while winding the film into a roll again without cutting the film.

2. The method for sealing a honeycomb structure according to claim 1,
wherein, prior to the masking step, the method comprises a frame member setting step of fitting the end part of the honeycomb structure into a frame member having a central opening part having substantially the same shape as the cross sectional shape of the honeycomb structure to align the surface of the end part of the honeycomb structure and the outer surface of the frame member, and
wherein the masking step involves pasting the masking film onto the surface of the end part of the honeycomb structure from the outer surface side of the frame member aligned in the frame member setting step while unwinding the roll-shaped masking film having one side surface which is an adhesive surface.

3. The method for sealing a honeycomb structure according to claim 1 or 2,
wherein the slurry filling hole formation step involves imaging an end surface of the honeycomb structure, processing the image of the end surface imaged to recognize the positions of all the cells, and thereafter irradiating, with laser light, the position on the masking film which covers the opening end part of the cell to be sealed, thereby forming a slurry filling hole.

4. The method for sealing a honeycomb structure according to any one of claims 1 to 3,
wherein, prior to the masking film peeling step, the method comprises a slurry removal step of removing an excessive slurry that is attached to the surface of the masking film.

5. The method for sealing a honeycomb structure according to claim 4,
wherein, after the slurry removal step and prior to the masking film peeling step, the method comprises a surface drying step of drying the surface layer part of the slurry with which the end of the opening part of the cell has been filled.

6. The method for sealing a honeycomb structure according to any one of claims I to 5, wherein the end surfaces of the honeycomb structure are sealed one by one or simultaneously.

7. A device for sealing a honeycomb structure, the honeycomb structure being composed of a plurality of cells, which device seals an opening end part of the cell while carrying the honeycomb structure in a state where the cell longitudinal direction is held horizontally,
the device comprising:
a frame member having a central opening part having substantially the same shape as the cross sectional shape of the honeycomb structure;
a masking film pasting means which pastes a masking film onto the surface of the end part of the honeycomb structure fitted into the frame member while continuously unwinding the roll-shaped masking film without cutting the film;
a slurry filling hole formation means which forms a slurry filling hole in a place on the masking film which covers the opening end part of the cell to be sealed;
a sealing means which fills the slurry through the slurry filling hole; and
a masking film peeling means which peels the masking film that is pasted onto the surface of the end part of the honeycomb structure while continuously winding the film without cutting the film.

8. The device for sealing a honeycomb structure according to claim 7,
wherein the device comprises a slurry removal means of removing an excessive slurry that is attached to the surface of the masking film prior to the peeling of the masking film.

9. The device for sealing a honeycomb structure according to claim 8,
wherein the device comprises a surface drying means of drying the slurry surface after the slurry removal.
